# EUROPEAN PATENT APPLICATION

(11) **EP 2 309 494 A2**
(43) Date of publication of application: **13.04.2011**
(21) Application number: 10187034.3
(22) Date of filing: 08.10.2010
(51) Int. Cl.: G10L 19/00

(54) **Voice quality determination**

(30) Priority: 12.10.2009 GB 0917771
(71) Applicant: BiTEA Limited, Maldon, Essex CM9 4LA (GB)
(72) Inventor: Hanna, Alan, Mayland, Essex CM3 6EP (GB); Durham, Philip, Maldon, Essex CM9 8PR (GB)
(74) Representative: Gillam, Francis Cyril

(57) **Abstract**

Voice quality testing of digital wireless networks is carried out using a pair of units 29, 30, each unit 29, 30 having a substantially identical sound card 20. Each unit 29, 30 has a port 24 for connection to a communication terminal 32, 34 allowing audio signals to be transmitted over the wireless network by one unit 29 or 30 and received by the other 30 or 29. One unit 29 or 30 derives the audio signal to be transmitted from an originating data set and the other unit 30 or 29 converts the audio signal to produce a received data set. The received data set is then analysed against the originating data set to determine the voice quality of the network.

## Description

This invention relates to apparatus and a method for the determination of voice quality of a digital wireless network. This invention also relates to apparatus for the standardisation of voice quality testing of such networks.

The invention has been developed in connection with the determination of voice quality of Terrestrial Trunked Radio (TETRA) networks, and therefore will be described herein with particular emphasis on this application. The apparatus and method of the invention may be applied to many other types of digital radio network besides TETRA networks and so is not limited thereto.

TETRA is a digital trunked mobile radio standard developed by the European Telecommunications Standards Institute (ETSI). The largest TETRA network market is that of public safety, where the trend is for the deployment of nationwide networks shared by all public safety organisations, such as police, ambulance and fire services, coast guards, mountain rescue agencies and so on.

Voice quality is the most important aspect of digital speech wireless communications networks, particularly when the operation of such networks is relied upon by safety organisations. The quality of the speech signal received on a radio terminal is affected by a range of factors including attenuation of the signal, noise, encoding and decoding losses as well as modulation and demodulation losses.

The TETRA industry standard for testing voice quality of the uplink and downlink of the network is the "Perceptual Evaluation of Speech Quality" algorithm (PESQ^{®}) which uses a sensory model to compare the original, unprocessed signal with the degraded signal from the network or a network element. The resulting quality score is analogous to the subjective "Mean Opinion Score" (MOS), which is measured on a scale of 1 to 5.

The MOS is affected by many different factors. Particular problems occur in determining the MOS of an audio voice signal over a wireless network, when the audio signal is played by one computer sound card and after transmission is recorded by a different type of computer sound card. This problem often arises when voice quality testing is carried out using a conventional laptop or desk top computer because there is no standardisation of the type and quality of sound cards used in those computers. As a result, the MOS of the voice quality of a wireless network determined by the PESQ standard can be wholly inaccurate.

The term "played" as used herein with reference to a sound card should be construed as meaning the conversion by the sound card of a data file to an audio signal and conversely the term "record" should be construed as the conversion of an audio signal to a data file.

Specialised test devices exist which are specifically adapted to perform all of the functions required for determining the voice quality of a wireless network. Current commercial devices of this kind can be very complicated to operate, and due to their complex nature are also very expensive.

It is a principal aim of the present invention to provide a method and apparatus able to achieve an accurate determination of the voice quality of a digital wireless network, which method and apparatus are easy to operate, cost effective and which overcome the problems associated with existing methods.

According to this invention, there is provided a method for determining the voice quality of a digital wireless network, comprising the steps of:
a) driving a first sound card with an first originating data set to produce an audio signal;
b) passing said audio signal to a first communication terminal;
c) transmitting the audio signal over the wireless network by said first communication terminal;
d) receiving the transmitted audio signal on a second communication terminal;
e) passing the received audio signal from the second communication terminal to a second sound card substantially identical to said first sound card so as to produce a received data set; and
g) analysing the received data set against the first originating data set to determine the voice quality of the network.

The method of this invention eliminates the effect of degradation in sampling the signal by having substantially identical first and second sound cards i.e. soundcards of the same type, quality and manufacture. Moreover, it is highly preferred that the sound cards play and record at the same quality in order to achieve full standardisation for the analysis. Ideally, the sound cards are of high quality, and of a better quality than those normally used in conventional laptop or desktop computers.

While any accepted voice quality analysis standard may be used to analyse the received data set against the originating data set, it is preferred that the PESQ algorithm be used and a MOS determined.

The originating data set is a reference data file, such as a .wav file, which may comprise a sequence of audio sound samples pre-selected to simulate the high and low frequencies of a typical voice. Alternatively, a natural voice sample may be used. A set of reference data files comprising a variety of female and male voices could be stored for selection, as required. The reference data file or files are ideally stored in a first computer and a selected file is supplied to the first sound card.

The analysis of the originating and received data sets to determine the voice quality is preferably performed by a second computer. To facilitate such analysis, the second computer needs to have knowledge of the originating data set and preferably a copy of the reference data file is stored in the second computer. In this arrangement, the MOS obtained by the analysis of the original and received data sets may be transmitted back to the first computer to be stored thereon. This may be achieved simply by transmitting the MOS over the wireless network the performance of which is being determined. Alternatively, a different form of transmission may be used for this purpose.

In a preferred arrangement, the first sound card and the second sound card are incorporated in respective first and second units separate from but associated with the first and second computers. Each unit may be adapted to interface a computer to ensure a standardised voice quality determination, without interfering with or modifying the internal components of the associated computer.

The purpose of determining the voice quality of a wireless network is to assist in ensuring high quality communication. The method of this invention determines the voice quality of the uplink and downlink of the network. Ideally, to provide full testing of the network, the first communication terminal is configured as a master module and the second communication terminal configured as a slave module, both modules operating to determine the voice quality of the wireless network. In this embodiment, the method may further comprise the steps of:
a) driving the second sound card with a second originating data set to produce an audio signal;
b) passing said audio signal to the second communication terminal;
c) transmitting the audio signal over the wireless network by said second communication terminal;
d) receiving the transmitted audio signal on the first communication terminal;
e) passing the received audio signal from the first communication terminal to the first sound card so as to produce a received data set; and
g) analysing the received data set against the second originating data set to determine the voice quality of the network.

While the first originating data set has no bearing upon the MOS obtained by analysing the received data set against the second originating data set, to ensure consistency in the method it is envisaged that the first originating data set is the same as the second originating data set.

Preferably, the second originating data set is stored in a second computer and is supplied to the second sound card. To facilitate analysis of the received data set against the second originating data set, it is preferable the second originating data set is also stored in the first computer and the analysis performed by said first computer.

It is important to eliminate as many variables as possible in order to obtain an accurate determination of the voice quality of the network. One of either the first communication terminal or second communication terminal may be positioned at a fixed location with a good radio frequency link to a base station. Alternatively, or additionally, one of the first or second communication terminal may be a roaming terminal, which is adapted to be carried or driven around.

According to a second aspect of this invention there is provided apparatus for determining voice quality of a wireless network comprising a pair of units, each unit having:
- a data transmission port for connection to a computer;
- an analogue port for connection to a communication terminal; and
- control means for controlling the operation of the unit;
characterised in that each unit includes an internal sound card; and in that the sound cards of the two units are substantially identical.

Each unit may be arranged to pass audio files between the sound card and a connected communication terminal. The communication terminal is preferably a TETRA radio and each unit connects to the PEI port of the radio. The control means is preferably adapted to control the transmission and the receiving of audio data between the communication terminals.

The audio files may be stored on a computer and may be passed to the sound card within a chosen unit in order to determine the voice quality of the network. Alternatively, each unit may include a storage device for storing the audio files which comprise the originating data sets and possibly also the received data sets. When the performance of the network is to be determined, the originating data set may be passed from the storage device to the sound card within the unit in order to be converted to an audio signal for transfer to a communication terminal and then transmission over the network.

A connected computer may be arranged to control operation of the unit. Alternatively, a microcomputer may be incorporated in each unit, to control the operation thereof in accordance with a predetermined program. In this way, an analysis program may be stored in each unit to determine the voice quality of the wireless network. The analysis program is preferably the PESQ algorithm to obtain a MOS. The MOS obtained using the apparatus will not be substantially affected by the quality of the sound card as the sound card which is used to convert the data to an audio signal is substantially identical to the sound card used to convert the received audio signal to a corresponding data file.

In a preferred arrangement, each unit contains firmware which is programmable to enable copy control software to be stored thereon. Each unit may further comprises a port for connection to a software authentication dongle. In this way, a licence must be obtained in order to use the unit or the software therein for determining the voice quality of the network.

The apparatus of this invention operates as an audio and data control interface which is easy to install and ensures standardisation in the determination of voice quality of a wireless network. The apparatus enables the accurate determination of voice quality using a conventional laptop or desktop computer, irrespective of the type of sound card contained therein.

By way of example only, the apparatus of this invention will now be described in detail, reference being made to the accompanying drawings in which:-
Figure 1 illustrates the internal construction of a unit of this invention for use in determining the voice quality of a wireless network; and
Figure 2 illustrates a preferred layout for determining the voice quality of a wireless network using two of the units of Figure 1.

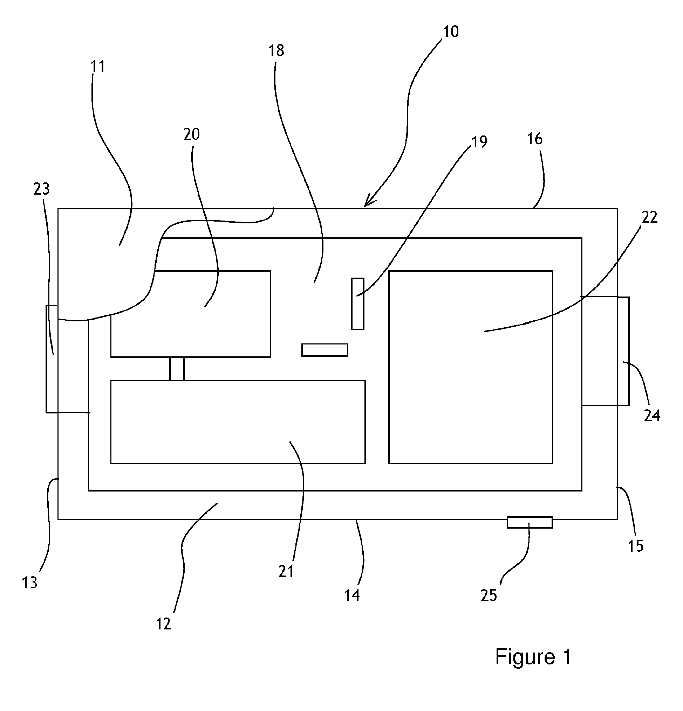

Referring to Figure 1 there is shown a schematic representation of the constituents of a unit of the invention. The unit generally comprises a casing 10 having a top 11, a bottom 12 and side walls 13, 14, 15, 16. The unit serves as an audio and data control interface and the casing 10 houses a PCB 18 having surface mount components 19 thereon. A sound card 20 is mounted on the PCB 18 and is adapted to convert between digital data and analogue audio signals. A storage memory unit 21 is also mounted on the PCB 18 and stores audio data files which are passed to and from the sound card 20.

A microcomputer 22 controls operation of the unit and contains a PESQ algorithm analysis program. An originating data set is passed to or stored within the microcomputer 22 and the analysis program uses the originating data set to determine the MOS of the voice quality of a wireless network, when supplied with a data file which has been transmitted over the network from a remote location. The microcomputer 22 is also configured to control the transmission of data over the wireless network.

The unit is adapted to interface a standard computer and a TETRA radio terminal. The unit has a port 23 on side wall 13 for connection to a computer and a port, 24 on side wall 15 for connection to a radio terminal. The unit operates to determine the voice quality of a wireless network by obtaining a MOS which is compared to a threshold value.

It may be necessary for a licence to be obtained in order to use the unit, and in particular the PESQ software. For this purpose, the software stored on each unit may be copy controlled and each unit includes an additional port 25 for connection of a software authentication dongle.

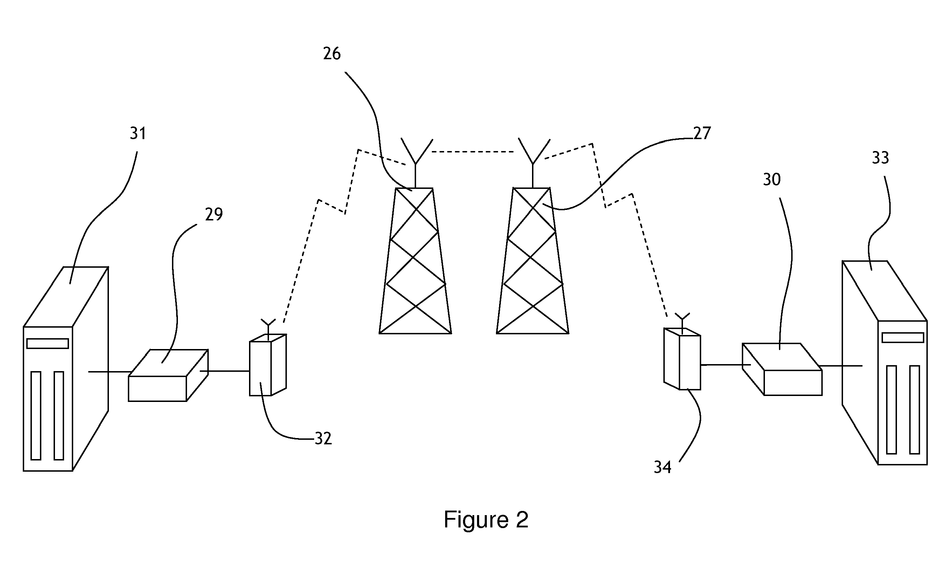

Referring now to Figure 2, there is shown a preferred arrangement for the connection of the unit to apparatus for determining the voice quality of a wireless network. The wireless network is the TETRA network comprising base stations 26, 27.

In order to determine the voice quality of the network, two identical units 29, 30 are required, each unit 29, 30 containing a substantially identical sound card 20. One unit 29 is connected to a first computer 31 and a first radio terminal 32 and in a substantially identical arrangement, the other unit 30 is connected to a second computer 33 and a second radio terminal 34. One radio terminal 32 is configured as a slave module and the other radio terminal 34 is configured as a master module. The slave module is positioned in a fixed location, whereas the master module is adapted to be a portable module which is either carried or driven around.

A particular originating data set is stored on both the first computer 31 and the second computer 33. In use, the originating data set on the first computer 31 is passed to the sound card 20 mounted in unit 29. An audio signal is produced by the sound card 20 which is then passed to the first radio terminal 32. The first radio terminal 32 encodes the signal which is then modulated using Differential Quaternary Phase Shift Keying (DQPSK) linear modulation. The modulated signal is transmitted over the uplink of wireless network to a first base station 26 and then over the downlink from a second base station 27 to be received by the second radio terminal 34. The second radio terminal 34 de-modulates and decodes the received data and passes the audio signal to the sound card 20 in the second unit 30. The sound card 20 in the second unit 30 converts the audio signal into a received data set which is then passed to the second computer 33. Both computers 31, 33 contain dedicated software for the analysis of the data and include a PESQ algorithm for determining the MOS of the voice quality of the wireless network. The algorithm uses the originating data set and the received data set data file to determine the MOS, which is then transmitted back to the first computer 31 to be stored therein. The computers 31, 33 may contain a user-interface and the calculated MOS's displayed on a map corresponding to the location of the network at which the voice quality is determined.

In a substantially identical yet sequential arrangement, in order that full determination of the voice quality of a network can be analysed the originating data set on the second computer 33 is passed to the sound card 20 mounted in unit 29 for transmission over the network to the first radio terminal 32. In this arrangement, the determination of the voice quality is also carried out by the first computer 31.

## Claims

1. A method for determining the voice quality of a digital wireless network, comprising the steps of:
a) driving a first sound card (20) with an originating data set to produce an audio signal;
b) passing said audio signal to a first communication terminal (32);
c) transmitting the audio signal over the wireless network by said first communication terminal (32);
d) receiving the transmitted audio signal on a second communication terminal (34);
e) passing the received audio signal from the second communication terminal (34) to a second sound card (20) substantially identical to said first sound card (20) so as to produce a received data set; and
g) analysing the received data set against the originating data set to determine the voice quality of the network.

2. A method as claimed in claim 1, wherein the analysing step is carried out using the Perceptual Evaluation of Speech Quality (PESQ) algorithm (known *per se)* to obtain a Mean Opinion Score (MOS).

3. A method as claimed in claim 1 or claim 2, wherein the originating data set is stored in a first computer (31) and is supplied to the first sound card (20).

4. A method as claimed in claim 3, wherein a copy of the originating data set is stored in a second computer (33) and the analysing step is performed by said second computer (33).

5. A method as claimed in claim 4, wherein the MOS is transmitted back to the first computer (31).

6. A method as claimed in 5, wherein the MOS is transmitted back to the first computer (31) over the wireless network the performance of which is being determined.

7. A method as claimed in any of claims 4 to 6, wherein the first sound card (20) and the second sound card (20) are incorporated in respective first and second units (29, 30) separate from but associated with the first and second computers (31, 33).

8. A method as claimed in any of the preceding claims, further comprising the steps of:
a) driving the second sound card (20) with a second originating data set to produce an audio signal;
b) passing said audio signal to the second communication terminal (34);
c) transmitting the audio signal over the wireless network by said second communication terminal (34);
d) receiving the transmitted audio signal on the first communication terminal (32);
e) passing the received audio signal from the first communication terminal (32) to the first sound card (20) so as to produce a received data set; and
g) analysing the received data set against the second originating data set to determine the voice quality of the network.

9. A method as claimed in claim 8, wherein the second originating data set is stored in a second computer (33) and is supplied to the second sound card (20).

10. A method as claimed in claim 9, wherein a copy of the second originating data set is stored in a first computer (31) and the analysing step of the second received data set is performed by said first computer (31).

11. Apparatus for determining voice quality of a wireless network comprising a pair of units (29, 30), each unit comprising :
- a data transmission port (23) for connection to a computer (31, 33);
- an analogue port (24) for connection to a communication terminal (32, 34); and
- control means (22) for controlling the operation of the unit;
**characterised in that** each unit includes an internal sound card (20); and **in that** the sound cards (20) of the two units (29, 30) are substantially identical.

12. Apparatus as claimed in claim 11, wherein each unit (29, 30) includes a storage device (21) for storing data sets.

13. Apparatus as claimed in claim 11 or claim 12, wherein there is a microcomputer (22) incorporated in each unit, to control the operation thereof in accordance with a predetermined program.

14. Apparatus as claimed in claim 13, wherein an analysis program is stored in each unit and wherein the analysis program is the Perceptual Evaluation of Speech Quality (PESQ) algorithm (known *per se)* to obtain a Mean Opinion Score (MOS).

15. Apparatus as claimed in any of claims 11 to 14, wherein copy control software is stored in each unit and each unit further comprises a port (25) for connection to a software authentication dongle.
